# EUROPÄISCHE PATENTSCHRIFT

(11) **EP 1 617 199 B1**
(45) Veröffentlichungstag und Bekanntmachung des Hinweises auf die Patenterteilung: **20.07.2011**
(21) Anmeldenummer: 05013457.6
(22) Anmeldetag: 22.06.2005
(51) Int. Cl.: G01M 17/007

(54) **Lenkadapter für Kraftfahrzeuge**
Adapter for a steering wheel of vehicles
Adaptateur pour volant de véhicules

(30) Priorität: 13.07.2004 DE 102004033741
(43) Veröffentlichungstag der Anmeldung: 18.01.2006
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Frank, Gerhard

(56) Entgegenhaltungen:
- EP-A1- 0 235 333
- US-A- 3 003 363
- US-A- 4 893 413
- US-A- 5 105 546
- US-A- 6 076 269

## Beschreibung

### Technischer Hintergrund

Zum Lenken eines Kraftfahrzeugs mittels eines Lenkroboters wird eine Vorrichtung benötigt, mit deren Hilfe eine Funktionseinheit (Antrieb oder Messvorrichtung) mit dem Lenkrad eines Kraftfahrzeugs verbindbar ist. Diese Vorrichtung wird als Lenkadapter bezeichnet.

### Stand der Technik

Aus US 3,003,363 ist eine Vorrichtung zur Fernbedienung eines Lenkrades eines Kfz bekannt. Diese weist eine Grundplatte mit Klemmmitteln auf, die an drei Ecken angeordnet sind und über die die Vorrichtung am Außenumfang des Lenkrades festspannbar ist. Die Grundplatte ist dabei über einen motorischen Antrieb verdrehbar, der mittels eines Fixierarmes an einem Karosserieteil gehalten ist.

Es sind Fahrroboter bekannt, die Verbindungselemente zum Lenkrad aufweisen, z.B. aus der EP 0 235 333, der EP 0 236 518 B1. oder der DE 39 40 588. Die dort dargestellten Fahrroboter dienen jedoch zur automatisierten Betätigung der Pedale des Kraftfahrzeuges, die konstruktive Verbindung zum Lenkrad dient hier ausschließlich zur Abstützung des Fahrroboters und zu dessen sicherer Halterung.

Die US 3 999 425 zeigt eine Vorrichtung zur Abgasmessung für ein Fahrzeug, bei dem ein Aktivator für das Gaspedal mittels einer Stange zwischen Lenkrad und Bodenplatte gehalten ist. Der Lenkradkranz dient auch hier als mechanisches Gegenlager für ein Messgerät, das Lenkrad wird dabei nicht bewegt, so dass es auf die Übertragung oder Messung von Drehmomenten für den hier vorliegenden Zweck der Abgasmessung nicht ankommt.

Die DE 33 03 588 A1 zeigt einen Fahrroboter, der auch als Lenkroboter ausgelegt ist; hierbei dient zur Betätigung des Lenkrads eine Reibrolle, die von einem Pneumatikzylinder an die Außenseite des Lenkrades angefahren und angepresst wird. Ein Drehmoment zur Lenkung des Kraftfahrzeuges wird somit unmittelbar von außen auf das Lenkrad übertragen.

Die US 3 465 577 zeigt eine ähnliche Lösung, nämlich einen Lenkroboter, bei dem über einen Motor ein Drehmoment über zwei Walzen auf die Außenseite des Lenkradkranzes ausgeübt wird.

Die US 5 865 266 zeigt einen Lenkroboter, dessen Drehwelle mittels eines Adapters an das Lenkrad angekoppelt wird. Die Drehmomentübertragung erfolgt durch Verschraubung des Adapters unmittelbar mit der Lenkachse.

Bei der US 4,893,413 wird eine Verbindungseinheit mit dem Lenkrad eines Fahrzeuges verbunden, jedoch dient diese zur Abstimmung der Position des Lenkrads einerseits mit der Position der Räder bei deren Justierung andererseits. Hierzu liegen Arme der Verbindungseinheit über Rollen an der Innenseite des Lenkrads an, die keine Kraft zur Lenkung ausüben brauchen, da sie lediglich ein Signal zur aktuellen Position des Lenkrads erzeugen und übertragen sollen. Die Rollen werden hierbei so positioniert, dass die Arme im Eckbereich zwischen Lenkradkranz und den Lenkradspeichen zu liegen kommen, wobei zwingend erforderlich ist, dass die Lenkradspeichen in der unteren Hälfte des Lenkradkranzes liegen, da sonst eine Verspannung der Verbindungseinheit gegen die Windschutzscheibe des Fahrzeugs mittels eines Festsetzelements nicht möglich ist.

Die gattungsbildende US 3 889 527 zeigt einen Lenkadapter, der zur Aufnahme einer Messeinrichtung zur Messung der Ausschläge eines gelenkten Vorderrades dient und diese mit mit dem Lenkrad verbindet. Der Lenkadapter bewegt sich dabei mit dem Lenkrad mit. Da es sich hierbei lediglich um eine Messeinrichtung des Drehwinkels handelt, ist eine kraftschlüssige Verbindung zwischen dem Lenkadapter und dem Lenkrad nicht erforderlich, es ist folglich ausreichend, den Lenkadapter mittels eines bogenförmig gestalteten Aufhängers auf der Oberseite des Lenkrades einzuhängen, und durch seitlich über das Lenkrad herausstehende Bauteile mit Gummiüberzug, die auf der Oberseite des Lenkrades aufliegen, einen ausreichender Reibschluss zu erzeugen, damit die Messeinrichtung über den Lenkadapter den Lenkbewegungen folgen kann.

US 6,076,269 und US 5,105,546 zeigen jeweils eine Messvorrichtung zur Messung einer Winkelabweichung der Ist-Neutralstellung eines Lenkrades gegenüber einer Soll-Neutralstellung. Beide Vorrichtungen weisen hierzu Mittel auf, über die sie im oberen Bereich des betreffenden Lenkrades festklemmbar sind, um sich im Betrieb der Messvorrichtung mit dem Lenkrad mitzubewegen.

### Darstellung_der Erfindung

Ein Grundproblem bei der Konzeption eines Lenkadapters besteht darin, dass auch bei Fahrrobotern, bei denen eine Drehmomentübertragung vom Lenkadapter auf das Lenkrad erfolgen muss, eine Anpassung an individuelle Lenkräder einfach möglich sein muss, wobei berücksichtigt werden muss, dass im unmittelbaren Umfeld des Lenkradkranzes typisch spezifische Anordnungen von Betätigungshebeln und Schaltelementen (Wischerhebel, Beleuchtungshebel, in USA auch Automatik-Wählhebel) angeordnet sind, die den Zugriffsraum zum Lenkrad einschränken.

Es ist daher Aufgabe der Erfindung, den gattungsgemässen Lenkadapter derart auszulegen, dass er auf allen bekannten Fahrzeugtypen eingesetzt werden kann, leicht zu montieren/demontieren ist und auch zur Übertragung von Drehmomenten bei der Verwendung in einem Fahrroboter geeignet ist.

Erfindungsgemäß wird diese Aufgabe gemäß den Merkmalen des Patentanspruchs 1 gelöst.

Die Erfindung geht davon aus, dass der obere Kreissegmentbereich eines Lenkrades, der in der Regel etwa die Hälfte der Gesamtfläche des Lenkrades ausmacht, bei allen Kraftfahrzeugen von Speichen oder sonstigen konstruktiven oder Bedienungselementen freigehalten ist, da er bei nahezu allen Kraftfahrzeugtypen dem Fahrer den freien Durchblick auf das Armaturenbrett mit den Anzeigeinstrumenten ermöglichen muss.

Der Grundgedanke der Erfindung besteht also darin, diesen oberen Freiraum zwischen Lenkradkranz und Speichen zur Ankoppelung des Lenkadapters an das Lenkrad zu benutzen indem sämtliche Halteelemente, die zur Fixierung und Klemmung des Lenkrades an der Halteplatte dienen, innerhalb dieses Freiraums des Lenkrades angeordnet werden, so dass sämtliche Spann- und Klemmkräfte auf das Lenkrad durch Bewegungen dieser Halteelemente von innen nach außen erzeugt werden. Somit sind in der Lenkradebene keine über den Lenkkranz hinaus ragende Bauteile erforderlich, die mit eventuell anderen vorgesehenen Schaltelementen im Bereich des Lenkrades in Konflikt kommen könnten.

Vorteilhafte Ausgestaltungen dieser erfindungsgemäßen Lösung betreffen die konstruktive Zusammenarbeit der Halteplatte mit den spezifisch hierfür ausgestalteten Halteelementen und Ausgestaltungen, mit denen insbesondere eine symmetrische Ankopplung einer Funktionseinheit an die Halteplatte ermöglicht wird.

Eine weitere vorteilhafte Ausgestaltung sieht vor, dass die Funktionseinheit über einen Arm mit der Karosserie des Kraftfahrzeugs verbindbar ist, in dem ein Entkopplungsglied derart angeordnet ist, dass stoßartige Karosseriebewegungen im Fahr- oder Simulationsbetrieb ferngehalten werden, so dass insbesondere keine Verfälschungen der Lenkkräfte durch Verspannung zwischen Karosserie und Lenkrad entstehen.

Das Entkopplungsglied kann auch zum Anzeigeinstrument zur Anzeige von Exzentrizitäten beim Bewegen des Lenkrads ausgebaut werden.

Die Funktionseinheit kann ein Antrieb zur Drehung des Lenkrads sein, dann ist die Anordnung von Lenkadapter und Antrieb ein Lenkroboter (aktive Funktionseinheit).

Weitere vorteilhafte Ausgestaltungen der erfindungsgemäßen Lösung sind weiteren Unteransprüchen zu entnehmen.

### Kurze Beschreibung der Zeichnungen

Ein bevorzugtes Ausführungsbeispiel des Lenkadapters wird nun anhand eines Lenkroboters mittels Zeichnungen erläutert; es zeigen:

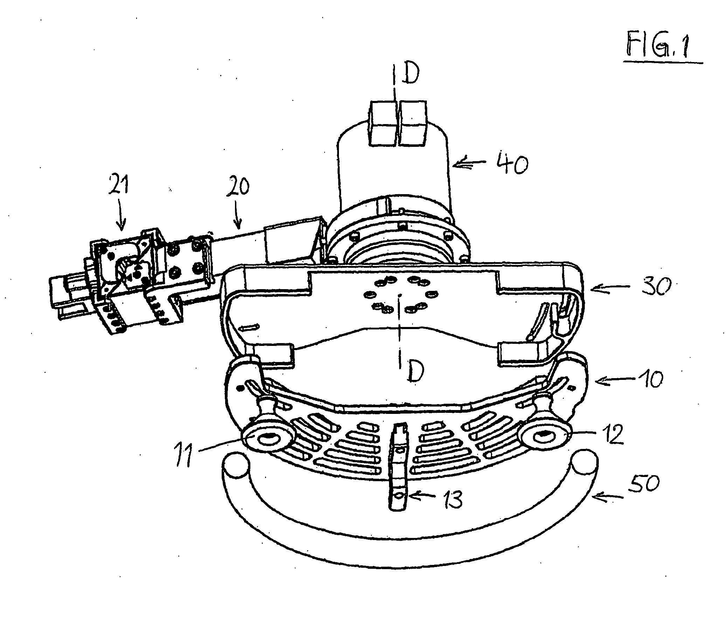

- Figur 1:: eine erste perspektivische Explosionsdarstellung des Lenkrobo- ters aus einem Blickwinkel unterhalb der Halteplatte,
- Figur 2:: eine zweite perspektivische Explosionsdarstellung des Lenkroboters aus einem Blickwinkel oberhalb der Halteplatte,
- Figur 3:: eine erste Aufsicht auf die Halteplatte in der Freigabeposition der Halteelemente,
- Figur 4:: eine zweite Aufsicht auf die Halteplatte in der Halteposition der beiden seitlichen Halteelemente,
- Figur 5:: eine dritte Aufsicht auf die Halteplatte in der Halteposition aller drei Halteelemente,
- Figur 6:: einen Längsschnitt in der Achse A-A durch die Halteplatte in der Halteposition gemäß Figur 5,
- Figur 7:: eine Perspektivdarstellung des Entkopplungsgliedes, und
- Figur 8:: eine Aufsicht auf das Entkopplungsglied.

### Beschreibung des Ausführungsbeispiels

Beim dargestellten Ausführungsbeispiel wird der Lenkadapter in einem Lenkroboter eingesetzt, d.h., die Funktionseinheit ist ein Antrieb, z.B. ein Elektromotor 40.

Dieser Lenkroboter besteht im wesentlichen aus folgenden Bauteilen:
Eine Halteplatte 10 mit Halteelementen 11,12 und 13 an ihrer Unterseite dient zur Klemmung des oberen Bogens des Lenkrads 50. Die Halteplatte 10 ist hierzu bogen- oder sichelförmig ausgeführt, wobei ihr Außenradius etwa einem Mittelwert des Außenradius der üblichen Lenkräder entspricht. Anstelle einer Halteplatte können auch andere konstruktive Lösungen (z.B. Haltearme) gewählt werden, die sowohl als Gegenlager für die Halteelemente als auch zur Ankopplung des Motors 40 als Antrieb geeignet sind.

Die Halteplatte 10 dient als Angriffsfläche für ein bügelförmiges Gehäuse 30, das an seinen gegenüberliegenden Randbereichen mit in Längsschlitzen 31 geführten Schrauben 32 justierbar mit der Halteplatte 10 verbindbar ist. Das Gehäuse 30 ist mittig kraftschlüssig mit der Drehachse D-D des Motors 40 verbunden, der seinerseits über einen Arm 20 mit einem festen Karosserieteil verbunden ist, an dem er sich abstützen kann. Bei Betätigung des Motors 40 um seine Drehachse D-D wird dessen Drehmoment folglich über den randseitigen Befestigungsbereich des Gehäuses 30 auf die Halteplatte 10 und dadurch auf das zwischen Halteplatte 10 und Halteelementen 11,12,13 eingespannte Lenkrad 50 übertragen und somit eine Lenkbewegung simuliert.

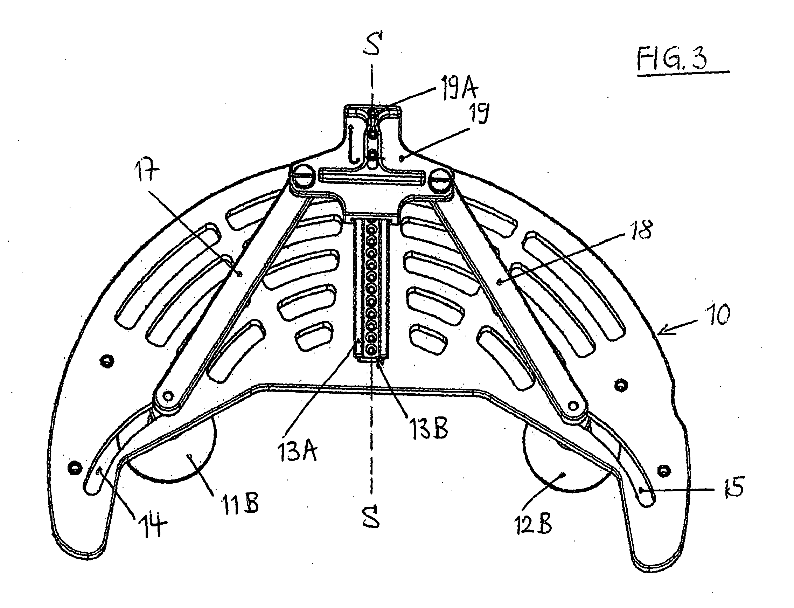

Von besonderer Bedeutung bei der Erfindung zur Erreichung der Ankoppelung des Lenkroboters an den Lenkradkranz ausschließlich von innen her sind die Halteelemente, die mit der Halteplatte 10 zusammenarbeiten, konstruktiv in besonderer Weise ausgebildet und in der Halteplatte 10 führbar und arretierbar sind, wie die im folgenden insbesondere anhand der Figuren 3 bis 6 näher erläutert wird:
Beim dargestellten Ausführungsbeispiel sind drei Halteelemente vorgesehen, wobei zwei hinsichtlich einer Symmetrieachse S-S symmetrisch verschiebbare seitliche Halteelemente 11 und 12 angeordnet sind, sowie ein in der Symmetrieachse S-S verschiebbares oberes, mittiges Halteelement 13.

Die beiden seitlichen Halteelemente 11,12 beinhalten einen eine Führungsnut 14,15 durchgreifenden, zylindrischen Fuß 11A,12A und einen daran anschließenden Kegelstumpf 11B,12B, der in Richtung zur Ebene der Halteplatte 10 abgeschrägte Klemmflächen bildet, die zum Anpressen des Lenkrades 50 auf die Halteplatte 10 in der Halteposition dienen, indem sie die in der Lenkradebene auf die Halteelemente 11,12 aufgebrachte Stellkraft nach dem Prinzip der schiefen Ebene in eine senkrecht zur Lenkradebene auf das Lenkrad wirkende Spannkraft umsetzen, durch die eine Klemmung des Lenkradkranzes zwischen Halteelementen und Halteplatte erzielt wird.
Die Führungsnuten 14 und 15 sind kreisbogenförmig derart angeordnet, dass eine Verschiebung des Fußes 11A,12A zu einer Änderung des Abstandes des Fußes von der Symmetrieachse S-S bzw. zur Annäherung des Fußes an den Außenrand der Halteplatte 10 bzw. den Innenrand des zu ergreifenden Lenkrades 50 führt.

Das obere Ende des Fußes 11 A,12A ist mit jeweils einer Stellstange 17,18 verbunden, deren anderes Ende drehbar mit einem gemeinsamen, in der Symmetrieachse S-S radial auf der Halteplatte 10 verschiebbaren Stellschieber 19 verbunden ist. Wegen der Symmetrie der gesamten Anordnung zur Symmetrieachse S-S ist dadurch gewährleistet, dass der Abstand der beiden seitlichen Halteelemente 11 und 12 zur Symmetrieachse S-S in jeder Radialposition des Stellschiebers 19 gleich ist.

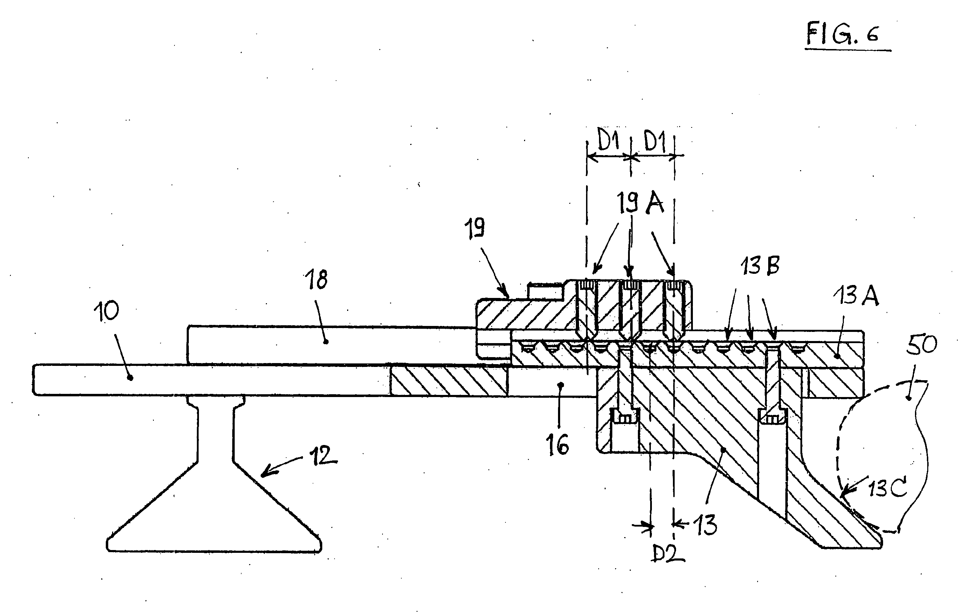

Das dritte Halteelement 13 ist ein in einer in der Symmetrieachse S-S angeordneten radialen Führungsnut 16 gehaltener Klemmnocken mit einer zum Lenkrad 50 zeigenden, abgeschrägten Klemmfläche 13C, die in der Halteposition das Lenkrad 50 übergreift und auf die Halteplatte 10 drückt (Figur 6).

Das dritte Halteelement 13 hat ebenfalls einen Fuß 13A, der die radiale Führungsnut 16 durchgreift und auf seiner Oberseite eine Reihe von Bohrungen 13B aufweist, in die Schrauben 19A auf der Oberseite des Stellschiebers 19 derart eingebracht werden können, dass bei Erreichen der Halte- oder Klemmposition der Halteplatte 10 auf dem Lenkrad 50 mittels der drei Halteelemente 11,12,13 eine zuverlässige Fixierung aller drei Halteelemente mit nur einem Arretiervorgang möglich ist.

Der Ablauf eines solchen Arretiervorgangs wird anhand der Figuren 3 bis 5 dargestellt:
In Figur 3 befindet sich die Halteplatte 10 mit ihren Halteelementen 11,12,13 in ihrer Freigabeposition, d.h., der Stellschieber 19 befindet sich in seiner radial äußersten Position auf der Halteplatte 10, mit der Folge, dass infolge der Ankopplung der beiden seitlichen Halteelemente 11,12 über die Stellstangen 17,18 sich die beiden seitlichen Halteelemente 11,12 in einer Position befinden, bei der sich ihr Fuß 11A, 12A am inneren Ende der Führungsnut 14,15 befindet. In dieser Position nehmen folglich die beiden seitlichen Halteelemente 11,12 ihren geringsten Abstand voneinander ein; das obere, mittige Halteelement 13 ist ebenfalls in seiner Freigabeposition angeordnet, d.h., sein Fuß 13A befindet sich in der radial innersten Position in seiner Führungsnut 16 auf der Halteplatte 10.

Mit dieser Anordnung der Halteelemente kann die Gesamtanordnung aus Motor 40, Gehäuse 30 und montierter Halteplatte 10 in den oberen, freien Kreissegmentbereich des Lenkrades 50 eingeführt werden, bis der Randbereich der Halteplatte 10 auf dem oberen Randbereich des Lenkrades aufliegt und die Halteelemente 11,12,13 die Lenkradebene durchgreifen.

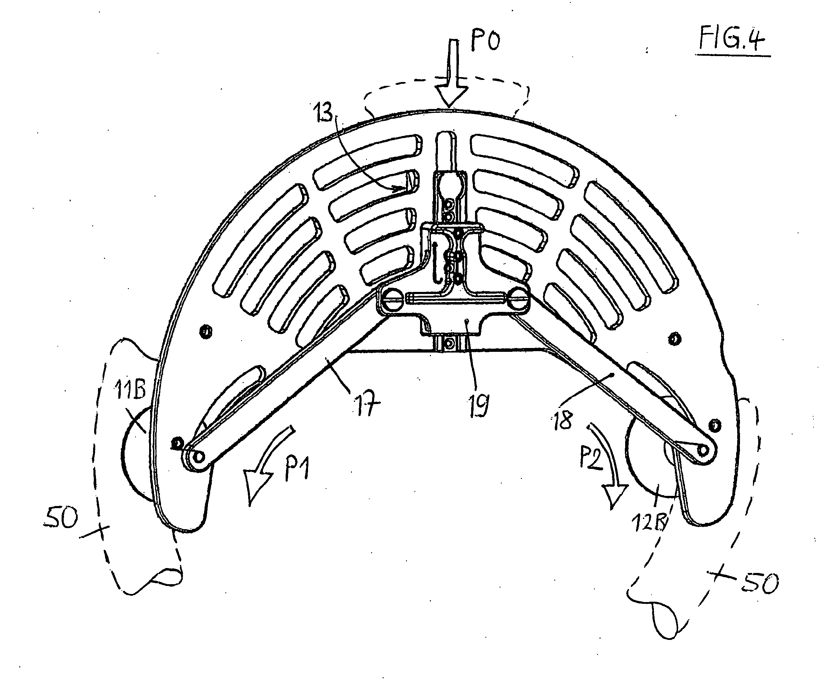

In dieser Position beginnt der erste Abschnitt des Arretiervorgangs (Figur 4), bei dem durch Ausübung einer radial gerichteten Kraft P0 auf den Stellschieber 19 dieser radial nach innen gedrückt wird, mit der Folge, dass die Stellstangen 17,18 die beiden seitlichen Halteelemente 11,12 in ihrer Führungsnut 14,15 so weit nach außen verschieben, bis infolge der abgeschrägten Klemmflächen der Kegelstümpfe 11B,12B eine Klemmung des Lenkrades 50 zwischen diesen Kegelstümpfen 11B,12B und der Unterseite der Halteplatte 10 vorzugsweise im Eckbereich des oberen Abschnitts des Lenkradkranzes und der beiden oberen Lenkradspeichen erreicht ist. Die Kraftausübung in Richtung des Pfeils P0 führt demnach zu einer Schwenkbewegung in Richtung der Pfeile P1,P2 der beiden seitlichen Halteelemente 11,12 bis zum Erreichen der genannten Eckposition und dort zur Klemmung des Lenkrads 50.

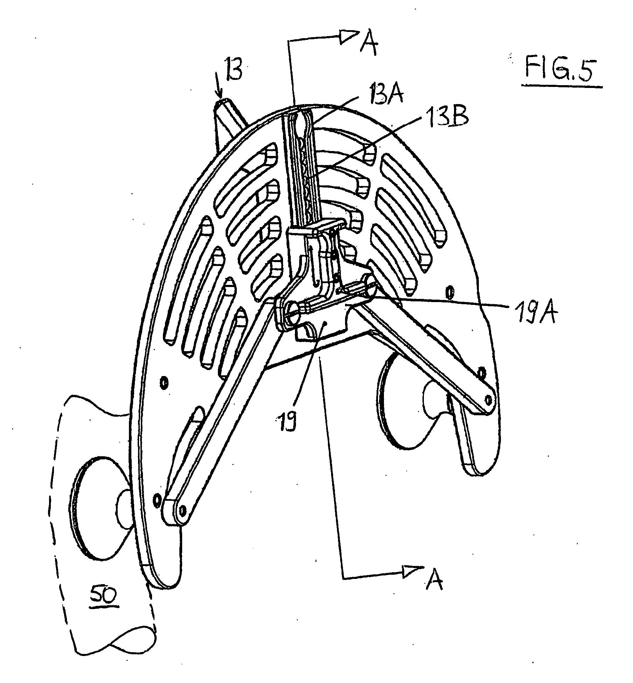

Ist diese Position erreicht, wird im zweiten Abschnitt des Arretierungsvorgangs das Griffende des oberen, mittleren Halteelementes 13 erfasst und dieses mit seinem Fuß 13A radial so weit nach außen gedrückt (Pfeil P3 in Figur 5), bis auch hier eine sichere Klemmung des oberen Bogenbereichs des Lenkradkranzes zwischen der Klemmfläche 13C des mittigen Halteelements 13 und der Halteplatte 10 erreicht ist (Figur 6).

Die Symmetrieachse S-S sollte in dieser Klemmposition möglichst durch die Drehachse des Lenkrades verlaufen, um Exzentrizitäten bei späteren Bewegungen des Lenkroboters zu vermeiden.

Zur Sicherung der Klemmung wird im dritten Abschnitt des Arretierungsvorgangs eine der Stellschrauben 19A in einer der Bohrungen 13B auf der Unterseite des Fußes 13A des mittigen Halteelementes 13 festgesetzt, wobei die Abstände D1 der drei Stellschrauben 19A im Stellschieber 19 einerseits und die Abstände D2 der Gegenbohrungen 13B andererseits so aufeinander abgestimmt sind, dass sich immer eine Konstellation von Stellschraube 19A und Gegenbohrung 13B des Lenkrads findet, bei der unter allen Umständen die einmal erreichte feste Klemmung des Lenkrads zwischen der Halteplatte und den drei Halteelementen durch eine einzige Schraubbewegung sicherbar ist.

Damit ist eine feste Ankopplung des Motors 40 an das Lenkrad 50 erreicht, wobei im Idealfall die Drehachse des Motors 40 mit der Drehachse des Lenkrades fluchtet, dies kann ggf. durch eine Justierung des Gehäuses 30 an der Halteplatte 10 mittels der Schrauben 32 in den Schlitzen 31 erreicht werden, mit der die Drehachse D-D des Motors 40 auf der Symmetrieachse S-S verschoben werden kann, bis sie mit der Lenkachse zusammenfällt.

Der Motor 40 stützt sich über den Arm 20 an einem festen Karosserieteil ab, beispielsweise an der A-Säule der Karosserie, um sicherzustellen, dass das vom Motor 40 aufgebrachte Drehmoment auf das Lenkrad 50 übertragen wird.

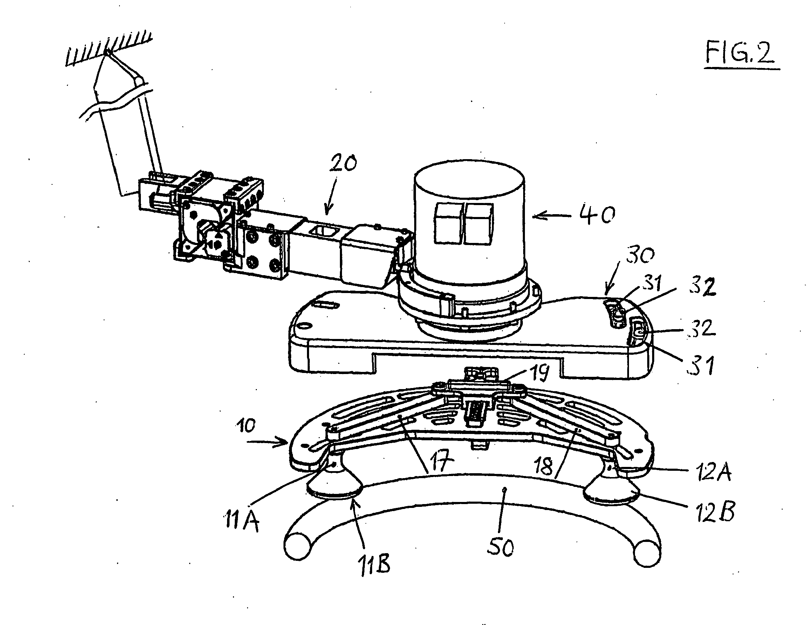

Gemäß einer bevorzugten Ausführungsform der Erfindung besteht der Arm 20 aus einem ersten Abschnitt 20A, der mit dem Motor 40 verbunden ist, und einem zweiten Abschnitt 20B, der beispielsweise an genannter A-Säule befestigt ist, was in Figur 2 links oben schematisch angedeutet ist.

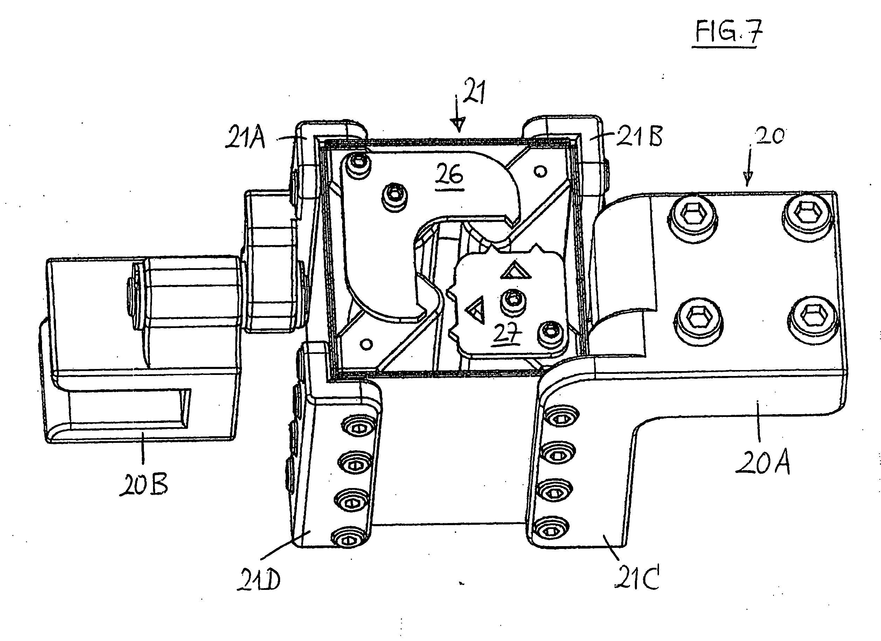

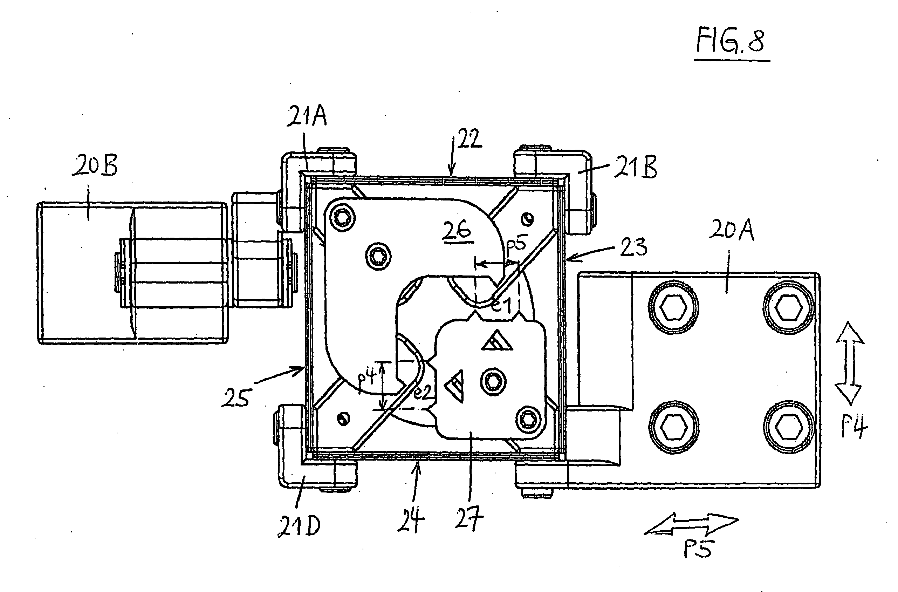

Zwischen den beiden Abschnitten 20A,20B ist ein Entkopplungsglied 21 angeordnet, wie dies in den Figuren 7 und 8 dargestellt ist.

Das Entkopplungsglied 21 besteht im wesentlichen aus einer Mehrzahl von Blattfedern 22-25, die mit quadratischem Querschnitt blockartig übereinander angeordnet sind, und an ihren Enden unter Bildung von Ecken 21 A bis 21 D miteinander verbunden sind. Dadurch entsteht ein Gebilde, das eine Verschiebung der beiden Arme 20A,20B in der Zeichenebene der Figur 8 (X-Y-Ebene) in Richtung der Doppelpfeile P4,P5 gestattet, nicht jedoch eine Verschiebung in der dazu senkrechten Achse (Z-Achse).

Die Zwischenschaltung dieses Entkopplungsgliedes bewirkt einerseits, dass stoßartige Karosseriebewegungen im Fahr- oder Simulationsbetrieb, die zu einer Verfälschung der Lenkbewegung führen könnten, vom Motor 40 ferngehalten werden.

Andererseits ermöglicht diese Anordnung eine Messung des Exzentrizitätseffektes bei der Betätigung des Lenkrades, d.h., der seitlichen Verschiebungen des Motors 40, wenn die Motorachse nicht mit der Lenkachse D-D fluchtet:

Durch Anordnung von Anzeigeelementen 26,27 in der Zeichenebene der Figur 8 (X-Y-Ebene) in gegenüberliegenden Ecken und deren entsprechende räumliche Gestaltung, z.B. in Form von Messarmen im ersten Anzeigeelement 26, dessen als Spitzen ausgebildete Enden in ebenfalls durch Spitzen gekennzeichnete Randbereiche eines zweiten Anzeigeelementes 27, lassen sich Bewegungen (Doppelpfeile P4,P5) des Abschnitts 20A, der mit dem Motor 40 verbunden ist, in eine "Messanzeige" umwandeln: Bei den in den gegenüberliegenden Ecken, wo die Abschnitte 20A, 20B angelenkt sind, befestigten Anzeigeelementen 26,27 führt eine Verschiebung des Abschnitts 20A durch eine Lenkexzentrizität zu einer parallelogrammartigen Verschiebung des aus den Blattfedern 22-25 gebildeten Quadrats mit der Folge, dass ein entsprechender Messbereich p4,p5 anzeigbar wird, mit dem das Exzentrizitätsmaß e1 in der X-Ebene und das Exzentrizitätsmaß e2 in der y-Ebene darstellbar ist.

Diese Anzeige erlaubt unmittelbare Rückschlüsse auf Art und Umfang der Exzentrizität und erleichtert somit eine Nachjustierung des Gehäuses 30 auf der Halteplatte 10 mittels der Schlitze 31 und der Schrauben 32 in den Randbereichen des Gehäuses 30.

Es soll betont werden, dass die Zwischenschaltung des Entkopplungs- und Anzeigegliedes 21 eine komfortablere Handhabung und Einjustierung des Lenkroboters ermöglicht, zu dessen Funktion aber nicht zwingend erforderlich ist.

## Patentansprüche

1. Anordnung von Lenkadapter und aktiver Funktionseinheit für Kraftfahrzeuge,
wobei die Funktionseinheit durch einen Antrieb zur Drehung eines Lenkrades gebildet ist,
und der Lenkadapter Einrichtungen zur Verbindung der Funktionseinheit mit dem Lenkrad mittels einer mit der Funktionseinheit verbundenen, drehbaren Halteplatte mit Halteelementen, aufweist,
**dadurch gekennzeichnet, dass** die Halteelemente (11,12,13) derart ausgebildet sind, dass sie innerhalb des vom oberen Bereich des Lenkrads (50) gebildeten Kreisabschnitts am Lenkrad (50) anordenbar sind
und dort das Lenkrad (50) in einer Halteposition kraftschlüssig mit der Halteplatte (10) verbinden, indem sie unter Nutzung des oberen Freiraums zwischen Lenkradkranz und Speichen auf das Lenkrad (50) eine Spann- und Haltekraft ausschliesslich von der Innenseite des Lenkrads her aufbringen.

2. Anordnung nach Anspruch 1, **dadurch gekennzeichnet, dass** die Halteplatte (10) für jedes Halteelement (11, 12, 13) eine Führungsnut (14,15,16) aufweist, in der die Halteelemente (11,12,13) verschiebbar sind, bis sie in ihrer Halteposition in Kontakt mit dem Lenkrad (50) kommen.

3. Anordnung nach Anspruch 2, **dadurch gekennzeichnet, dass** die Halteelemente (11,12,13) im Abstand von der Ebene der Halteplatte (10) in Richtung zu dieser abgeschrägte Klemmflächen aufweisen, durch die bei Annäherung an die Halteposition das Lenkrad (50) auf die Halteplatte (10) gedrückt wird.

4. Anordnung nach Anspruch 2, **dadurch gekennzeichnet, dass** zwei seitliche Halteelemente (11,12) und ein oberes, mittiges Halteelement (13) vorgesehen sind.

5. Anordnung nach Anspruch 1 bis 4, **dadurch gekennzeichnet, dass** die beiden seitlichen Halteelemente (11,12) aus einem die Führungsnut (14,15) durchgreifenden zylindrischen Fuß (11A,12A) und einem daran anschließenden Kegelstumpf (11B,12B) bestehen, der die abgeschrägte Klemmfläche bildet.

6. Anordnung nach Anspruch 2 bis 4, **dadurch gekennzeichnet, dass** das obere, mittige Halteelement (13) ein in einer radialen Führungsnut (16) geführter Klemmnocken (13) mit in der Halteposition zum Lenkrad (50) zeigender Klemmfläche (13C) ist, der in seiner Halteposition das Lenkrad (50) übergreift.

7. Anordnung nach Anspruch 5, **dadurch gekennzeichnet, dass** der Fuß (11A,12A) der beiden seitlichen Halteelemente (11,12) auf der dem Lenkrad (50) abgewandten Seite der Halteplatte (14) mit einem Ende jeweils einer Stellstange (17,18) verbunden ist, deren anderes Ende drehbar mit einem gemeinsamen Stellschieber (19) verbunden ist, der radial auf der Halteplatte (10) verschiebbar ist.

8. Anordnung nach Anspruch 2 und 7, **dadurch gekennzeichnet, dass** die Führungsnuten (14,15) für die beiden seitlichen Halteelemente (11,12) bogenförmig derart in der Halteplatte (10) verlaufen, dass bei einem Arretiervorgang eine radiale Verschiebung des Stellschiebers (19) zur Lenkachse hin eine zur Lenkachse symmetrische Abstandsvergrößerung der beiden Halteelemente (11, 12) bis zum Kontakt mit dem Lenkrad (50) bewirkt.

9. Anordnung nach Anspruch 7 und 8, **dadurch gekennzeichnet, dass** der Stellschieber (19) auf einem die radiale Führungsnut (16) durchgreifenden Fuß (13A) des oberen, mittigen Halteelements (13) geführt ist, und dass Arretierungsmittel zwischen Fuß (13A) und Stellschieber (19) vorgesehen sind, um das mittige Halteelement (13) zusammen mit den beiden seitlichen Halteelementen (11,12) am Lenkrad (50) in ihrer Klemmposition am Lenkrad (50) auf dem Stellschieber (19) zu arretieren.

10. Anordnung nach Anspruch 9, **dadurch gekennzeichnet, dass** die Arretierungsmittel Stellschrauben (19A) im Stellschieber (19) sind, von denen zumindest eine in einer entsprechenden Gegenbohrung (13B) auf der Unterseite des Fußes (13A) des mittigen Halteelements (13) festsetzbar ist.

11. Anordnung nach Anspruch7, **dadurch gekennzeichnet, dass** die Ankopplung der Funktionseinheit an die Halteplatte (10) über ein den Stellschieber (19) und die Stellstangen (17,18) übergreifendes, bügelähnliches Gehäuse (30) erfolgt, das randseitig mit der Halteplatte (10) justierbar verbindbar ist.

12. Anordnung nach Anspruch 11, **dadurch gekennzeichnet, dass** die Funktionseinheit über einen Arm (20) mit der Karosserie des Kraftfahrzeugs verbindbar ist.

13. Anordnung nach Anspruch 12, **dadurch gekennzeichnet, dass** der Arm (20) ein Entkopplungsglied (21) beinhaltet, das stoßartige Karosseriebewegungen im Fahr- oder Simulationstrieb, die zu einer Verfälschung der Lenkbewegung führen könnten, von der Funktionseinheit fernhält.

14. Anordnung nach Anspruch 13, **dadurch gekennzeichnet, dass** das Entkopplungsglied (21) aus einer Anordnung von quadratisch angeordneten Blattfedern (22-25) besteht, die an den Ecken (21A-21D) des Entkopplungsgliedes (21) miteinander verbunden sind, wobei die Verbindung mit den Abschnitten (20A,20B) des Arms (20) an zwei gegenüberliegenden Ecken (21A,21C) erfolgt.

15. Anordnung nach Anspruch 14, **dadurch gekennzeichnet, dass** an zwei gegenüberliegenden Ecken (21A,21C) des Entkopplungsgliedes (21) Anzeigeelemente (26,27) derart angebracht sind, dass eine parallelogrammartige Verschiebung der Blattfedern (22-25) infolge einer exzentrischen Fixierung der Drehachse (D-D) der Funktionseinheit zur Drehachse des Lenkrades (50) bei Drehung des Lenkrads (50) mit Hilfe der Halteelemente zu einer definierten Relatiwerschiebung der Anzeigeelemente (26,27) führt, und so die Justierung des Gehäuses (30) auf der Halteplatte (10) ermöglicht.

16. Anordnung nach Anspruch 1, **dadurch gekennzeichnet, dass** der Antrieb ein Elektromotor (40) ist.

## Claims

1. Arrangement of steering adapter and active function unit for motor vehicles, wherein the function unit is formed by a drive to rotate a steering wheel, and the steering wheel comprises devices for connecting the function unit with the steering wheel by means of a rotatable holder plate which is connected to the function unit and comprises holding members, **characterised in that** the holding members (11, 12, 13) are formed such that they can be arranged on the steering wheel (50) within the circle portion formed by the upper part of the steering wheel (50) and there connect the steering wheel (50) with the holding plate (10) in a holding position by force fit **in that**, using the upper space between the steering wheel rim and spokes, they exert a clamping and holding force on the steering wheel (50) exclusively from the inside of the steering wheel.

2. Arrangement according to claim 1, **characterised in that** the holder plate (10) for each holding member (11, 12, 13) has a guide groove (14, 15, 16) in which the holding members (11, 12, 13) can be moved until they come into contact with the steering wheel (50) in its holding position.

3. Arrangement according to claim 2, **characterised in that** the holding members (11, 12, 13) comprise clamping surfaces which are chamfered in the direction of the holder plate (10) and spaced from the plane of said holder plate and by means of which the steering wheel (50) is pressed onto the holder plate (10) when approaching the holding position.

4. Arrangement according to claim 2, **characterised in that** two side holding members (11, 12) and an upper central holding member (13) are provided.

5. Arrangement according to claims 1 to 4, **characterised in that** the two side holding members (11, 12) consist of a cylindrical foot (11A, 12A) extending through the guide groove (14, 15) and attached to said foot a truncated cone (11B, 12B) which forms the chamfered clamping surface.

6. Arrangement according to claims 2 to 4, **characterised in that** the upper central holding member (13) is a clamping cam (13) guided in a radial guide groove (16) with clamping surface (13C) pointing towards the steering wheel (50) in the holding position, which cam in its holding position extends over the steering wheel (50).

7. Arrangement according to claim 5, **characterised in that** the foot (11A, 12A) of the two side holding members (11, 12), on the side of the holder plate (10) facing away from the steering wheel (50), is connected with one end of a respective actuating rod (17, 18), the other end of which is connected rotatably with a common actuating slider (19) which can be moved radially on the holder plate (10).

8. Arrangement according to claims 2 and 7, **characterised in that** the guide grooves (14, 15) for the two side holding members (11, 12) run in an arc in the holder plate (10) such that on a blocking process, a radial movement of the actuating slider (19) towards the steering axis causes an increase in distance, symmetrical to the steering axis, of the two holding members (11, 12) until contact with the steering wheel (50).

9. Arrangement according to claim 7 and 8, **characterised in that** the actuating slider (19) is guided on a foot (13A), extending through the radial guide groove (16), of the upper central holding member (13) and that blocking means are provided between the foot (13A) and the actuating slider (19) to block the central holding member (13) together with the two side holding members (11, 12) on the actuating slider (19) on the steering wheel (50) in their clamping position on the steering wheel (50).

10. Arrangement according to claim 9, **characterised in that** the blocking means are actuating screws (19A) in the actuating slider (10), at least one of which can be fixed in a corresponding counterbore (13B) on the underside of the foot (13A) of the central holding member (13).

11. Arrangement according to claim 7, **characterised in that** the coupling of the function unit to the holder plate (10) takes place via a bracket-like housing (30) which extends over the actuating slider (19) and actuating rods (17, 18) and can be connected adjustably at the edge with the holder plate (10).

12. Arrangement according to claim 11, **characterised in that** the function unit can be connected via an arm (20) with the bodywork of the motor vehicle.

13. Arrangement according to claim 12, **characterised in that** the arm (20) comprises a decoupling device (21) which decouples the function unit from jerky bodywork movements in drive or simulation mode which could lead to falsification of the steering movement.

14. Arrangement according to claim 13, **characterised** that the decoupling device (2) comprises an arrangement of leaf springs (22 - 25) arranged in a square and connected together at the corners (21A - 21D) of the decoupling device (21), wherein the connection with the portions (20A, 20B) of the arm (20) takes places at two opposite corners (21A, 21 C).

15. Arrangement according to claim 14, **characterised in that** at two opposite corners (21A, 21 C) of the decoupling device (21), indicator elements (26, 27) are provided such that a parallelogram-like movement of the leaf springs (22 - 25), due to an eccentric fixing of the rotary axis (D-D) of the function unit to the rotary axis of the steering wheel (50), on rotation of the steering wheel (50) by means of the holding members leads to a defined relative movement of the indicator elements (26, 27) and thus allows adjustment of the housing (30) on the holder plate (10).

16. Arrangement according to claim 1, **characterised in that** the drive is an electric motor (40).

## Revendications

1. Installation d'adaptateur de direction et d'unité fonctionnelle active pour des véhicules automobiles,
l'unité fonctionnelle étant formée par un entraînement pour tourner un volant,
et l'adaptateur de direction présentant des dispositifs pour relier l'unité fonctionnelle au volant au moyen d'une plaque de maintien rotative pourvue d'éléments de maintien et reliée à l'unité fonctionnelle,
**caractérisée en ce que** les éléments de maintien (11, 12, 13) sont formés de façon à pouvoir être agencés sur le volant (50) à l'intérieur de l'arc de cercle formé par la région supérieure du volant (50),
et y relient par friction le volant (50) à la plaque de maintien (10) dans une position de maintien, en appliquant au volant (50) une force de maintien et de tension exclusivement depuis la face intérieure du volant, en utilisant l'espace libre supérieur entre la jante du volant et les branches.

2. Installation selon la revendication 1, **caractérisée en ce que** la plaque de maintien (10) présente pour chaque élément de maintien (11, 12, 13) une rainure de guidage (14, 15, 16) dans laquelle les éléments de maintien (11, 12, 13) peuvent coulisser jusqu'à ce qu'ils viennent en contact avec le volant (50) dans leur position de maintien.

3. Installation selon la revendication 2, **caractérisée en ce que** les éléments de maintien (11, 12, 13) présentent des surfaces de blocage espacées du plan de la plaque de maintien (10) et en biais en direction de celle-ci, par l'intermédiaire desquelles le volant (50) est appuyé sur la plaque de maintien (10) à l'approche de la position de maintien.

4. Installation selon la revendication 2, **caractérisée en ce qu'**il est prévu deux éléments de maintien latéraux (11, 12) et un élément de maintien central supérieur (13).

5. Installation selon l'une quelconque des revendications 1 à 4, **caractérisée en ce que** les deux éléments de maintien latéraux (11, 12) consistent en un pied cylindrique (11A, 12A) engagé dans la rainure de guidage (14, 15) et en un tronc de cône (11B, 12B) subséquent qui forme la surface de blocage en biais.

6. Installation selon l'une quelconque des revendications 2 à 4, **caractérisée en ce que** l'élément de maintien central supérieur (13) est un sabot de blocage (13) guidé dans une rainure de guidage (16) radiale et ayant une surface de blocage (13C) qui est dirigée vers le volant (50) dans la position de maintien, et qui dans sa position de maintien vient en prise avec le volant (50) en le chevauchant.

7. Installation selon la revendication 5, **caractérisée en ce que** le pied (11A, 12A) des deux éléments de maintien latéraux (11, 12), est relié du côté de la plaque de maintien (10) opposé au volant (50), à une extrémité d'une barre de positionnement (17, 18) respective dont l'autre extrémité est reliée à pivot, à un coulisseau de positionnement (19) commun déplaçable radialement sur la plaque de maintien (10).

8. Installation selon les revendications 2 et 7, **caractérisée en ce que** les rainures de guidage (14, 15) pour les deux éléments de maintien latéraux (11, 12) s'étendent en forme d'arc dans la plaque de maintien (10) de façon que lors d'un processus d'immobilisation, un déplacement radial du coulisseau de positionnement (19) vers l'axe de direction fait croître l'écartement des deux éléments de maintien (11, 12), symétriquement par rapport à l'axe de direction, jusqu'au contact avec le volant (50)

9. Installation selon la revendication 7 et 8, **caractérisée en ce que** le coulisseau de positionnement (19) est guidé sur un pied (13A) de l'élément de maintien central supérieur (13) engagé dans la rainure de guidage radiale (16), et **en ce qu'**il est prévu des moyens d'immobilisation entre le pied (13A) et le coulisseau de positionnement (19), pour immobiliser sur le coulisseau de positionnement (19) l'élément de maintien central (13) sur le volant (50), ensemble avec les deux éléments de maintien latéraux (11, 12) dans leur position d'immobilisation sur le volant (50).

10. Installation selon la revendication 9, **caractérisée en ce que** les moyens d'immobilisation sont des vis de positionnement (19A) dans le coulisseau de positionnement (19), parmi lesquelles au moins une est fixable dans un perçage (13B) correspondant sur la face inférieure du pied (13A) de l'élément de maintien central (13).

11. Installation selon la revendication 7, **caractérisée en ce que** l'accrochage de l'unité fonctionnelle sur la plaque de maintien (10) s'effectue par l'intermédiaire d'un boîtier (30) similaire à un étrier chevauchant le coulisseau de positionnement (19) et les barres de positionnement (17, 18), et qui peut se relier de façon ajustable avec la plaque de maintien (10), dans la région du bord.

12. Installation selon la revendication 11, **caractérisée en ce que** l'unité fonctionnelle peut se relier par l'intermédiaire d'un bras (20) avec la carrosserie du véhicule automobile.

13. Installation selon la revendication 12, **caractérisée en ce que** le bras (20) contient un élément de découplage (21) qui tient à l'écart de l'unité fonctionnelle les mouvements brusques de la carrosserie en simulation ou en conduite qui pourraient fausser le mouvement de direction.

14. Installation selon la revendication 13, **caractérisée en ce que** l'élément de découplage (21) consiste en un agencement de ressorts à lame (22-25) agencés en carré qui sont reliés les uns aux autres aux coins (21A-21D) de l'élément de découplage (21), la liaison avec les tronçons (20A, 20B) du bras (20) s'effectuant à deux coins (21A, 21C) opposés.

15. Installation selon la revendication 14, **caractérisée en ce que** des éléments d'indication (26, 27) sont montés en deux coins (21A, 21C) opposés de l'élément de découplage (21), de façon qu'un déplacement de type parallélogramme des ressorts à lame (22-25) à la suite d'une fixation décentrée de l'axe de rotation (D-D) de l'unité fonctionnelle par rapport à l'axe de rotation du volant (50), conduit lors d'une rotation du volant (50) à l'aide des éléments de maintien, à un déplacement relatif défini des éléments d'indication (26, 27), et permet ainsi l'ajustement du boîtier (30) sur la plaque de maintien (10).

16. Installation selon la revendication 1, **caractérisée en ce que** l'entraînement est un moteur électrique (40).
